# EUROPÄISCHE PATENTSCHRIFT

(11) **EP 1 114 502 B1**
(45) Veröffentlichungstag und Bekanntmachung des Hinweises auf die Patenterteilung: **30.05.2007**
(21) Anmeldenummer: 00941916.9
(22) Anmeldetag: 17.05.2000
(51) Int. Cl.: H02K 5/22

(54) **ELEKTROMOTOR INSBESONDERE ELEKTRISCHER GETRIEBEMOTOR FÜR FAHRZEUGAGGREGATE**
ELECTRIC MOTOR, ESPECIALLY AN ELECTRIC GEARED MOTOR FOR VEHICLE AGGREGATES
MOTEUR ELECTRIQUE, EN PARTICULIER MOTEUR A ENGRENAGE POUR GROUPES D'UN VEHICULE AUTOMOBILE

(30) Priorität: 21.05.1999 DE 19923298
(43) Veröffentlichungstag der Anmeldung: 11.07.2001
(73) Patentinhaber: ROBERT BOSCH GMBH, 70442 Stuttgart (DE)
(72) Erfinder: LAUK, Detlef, D-77871 Renchen (DE); FISCHER, Ernst, D-76593 Gernsbach (DE); KARCHER, Hansjoerg, D-77830 Buehlertal (DE); HERP, Juergen, D-77815 Buehl (DE); MAURER, Erik, D-77815 Buehlertal (DE); WIEGERT, Andreas, D-77876 Kappelrodeck (DE); BOCK, Bernd, D-77830 Bühlertal (DE); HURST, Richard, D-77656 Offenburg (DE)
(86) Internationale Anmeldenummer: PCT/DE2000/001586
(87) Internationale Veröffentlichungsnummer: WO 2000/072425

(56) Entgegenhaltungen:
- EP-A- 0 655 822
- EP-A- 0 868 008
- WO-A-98/13925
- PATENT ABSTRACTS OF JAPAN vol. 1998, no. 13, 30. November 1998 (1998-11-30) & JP 10 225048 A (MABUCHI MOTOR CO LTD), 21. August 1998 (1998-08-21)

## Beschreibung

### Stand der Technik

Die Erfindung geht aus von einem Elektromotor, insbesondere elektrischen Getriebemotor zum Antreiben von Fahrzeugaggregaten, wie Front- und Heckscheibenwischer, Fensterheber u.dgl., der im Oberbegriff des Anspruchs 1 definierten Gattung.

Bei einem elektrischen Getriebemotor dieser Art mit einem Kommutatormotor (DE 198 58 233.1) ist bereits vorgeschlagen worden, Kommutator und Kommutatorbürsten in das Getriebegehäuse zu verlagern und damit den Steckeranschluß am Getriebegehäusedeckel auszubilden. Der Steckeranschluß wird dabei von Steckstiften gebildet, die in einer am Getriebedeckel tangential vorstehenden Tasche angeordnet sind. Der Verbindungsstecker zur Fahrzeugelektrik wird in die Tasche eingeschoben, wobei seine als Teckhülsen oder -buchsen ausgebildeten Steckerkontakte funktionsrichtig auf die Steckstifte des Steckeranschlusses aufgeschoben werden.

Da die verschiedenen Fahrzeughersteller unterschiedliche Ausführungen und Steckpositionen des Verbindungssteckers zur Fahrzeugelektrik vorgeben, ergibt sich für den Zulieferer des Getriebemotors die Notwendigkeit, für die verschiedenen Fahrzeughersteller speziell an deren Verbindungsstecker angepasste Getriebegehäusedeckel zu konstruieren, zu fertigen und vorzuhalten, so dass der Getriebemotor für jeden Fahrzeughersteller mit einem speziellen Getriebegehäusedeckel verschlossen werden kann.

Mit der EP-A1-0868008 ist ein Elektromotor bekannt geworden, an dessen axialen Ende ein Steckerbauteil für ein Motorstromanschluss angeschweißt wird. Dabei wird die Schweißverbindung anschließend mit einer Schutzkappe abgedeckt.

Die JP-A-10225048 zeigt ein Adapter für einen Steckeranschluss, wobei der Adapter an einer ersten Stirnseite in einer Vertiefung liegende Steckerzungen aufweist, und an einer gegenüberliegenden Stirnseite direkt mit Steckerfahnen des Elektromotors für den Motorstrom verbindbar ist.

### Vorteile der Erfindung

Der erfindungsgemäße Elektromotor, insbesondere elektrische Getriebemotor zum Antreiben von Fahrzeugaggregaten, hat den vorteil einer vereinfachten und kostengünstigen Herstellung, da durch den an den Verbindungsstecker zur Fahrzeugelektrik, auch Kundenstecker genannt, angepassten Adapter der Gehäusedeckel mit Steckeraufnahme für alle Kunden einheitlich ausgeführt werden kann und für jeden Kunden nur das kleinvolumige Adapterteil spezifisch gefertigt werden muss. Dies reduziert die Werkzeugkosten für das Spritzen des Gehäusedeckels und lässt die mit einem Werkzeug fertigbare Stückzahl des Gehäusedeckels erheblich steigen, so dass mit wachsender Stückzahl die Fertigungskosten sinken. Zudem wird auch der konstruktive Aufwand gesenkt, da der jeweils entsprechend dem Kundenwunsch neu zu konstruierende Adapter geringere Anforderung stellt als der an den Kundenwunsch anzupassende komplette Gehäusedeckel. Die Funktionen des Anschlußsteckers im Gehäusedeckel, wie Parkstellung, Entstörung, Kontakt- und Prüfstellung bei Anwendung des Getriebemotors zum Antrieb von Scheibenwischern, können damit einheitlich und einmalig gestaltet werden.

Die gestellte Aufgabe wird durch einen Elektromotor mit den Merkmalen des Anspruchs 1 gelöst.

Durch die in den weiteren Ansprüchen aufgeführten Maßnahmen sind vorteilhafte Weiterbildungen und Verbesserungen des im Anspruch 1 angegebenen Elektromotors möglich.

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise eine Draufsicht eines elektrischen Getriebemotors mit einem Einheits-Steckeranschluß,
- Fig. 2: eine perspektivische Darstellung eines Adapters zum Einstecken in den Einheits-Steckeranschluß in Fig. 1,
- Fig. 3: eine gleiche Darstellung wie in Fig. 2 eines Adapters gemäß einem weiteren Ausführungsbeispiel,
- Fig. 4: eine Draufsicht des Getriebegehäuses des Getriebemotors in Fig. 1 mit in den Einheits-Steckeranschluß eingestecktem Adapter gemäß Fig. 3,
- Fig. 5: eine gleiche Darstellung wie in Fig. 2 gemäß einem dritten Ausführungsbeispiel.

### Beschreibung der Ausführungsbeispiele

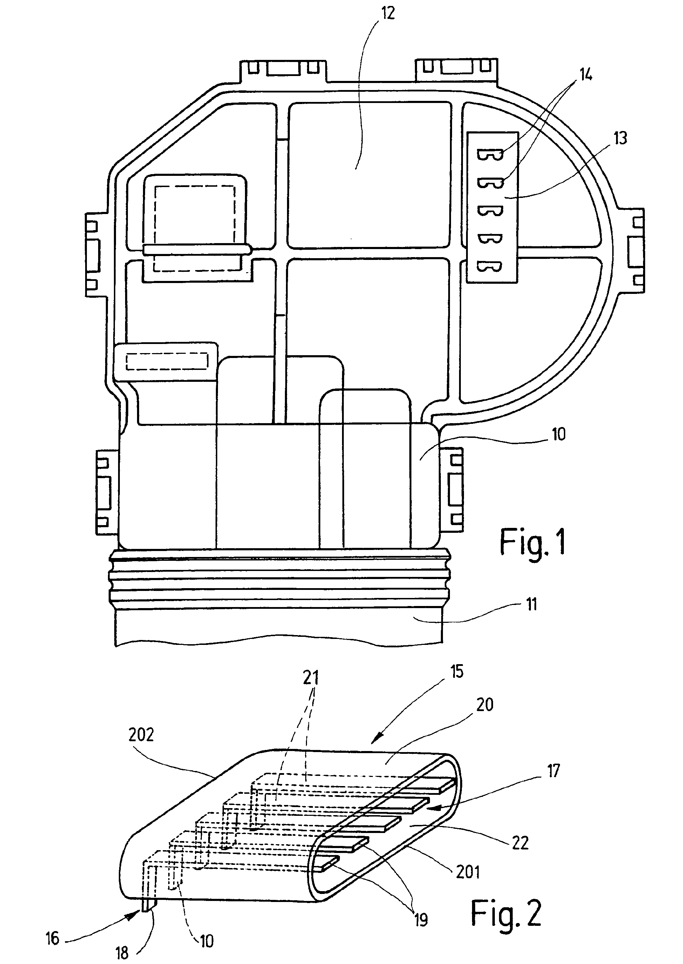

Der in Fig. 1 in Draufsicht ausschnittweise dargestellte elektrische Getriebemotor als Beispiel für einen allgemeinen Elektromotor dient beispielsweise zum Antrieb eines Scheibenwischers in einem Kraftfahrzeug. Er weist ein Getriebegehäuse 10 und ein an dieses angesetztes Motorgehäuse 11 auf. Das Getriebegehäuse 10, das ein hier nicht dargestelltes Getriebe aufnimmt, weist eine von einem Gehäusedeckel 12 verschlossene Montageöffnung auf, wobei zwischen dem Gehäusedeckel 12 und dem Getriebegehäuse 10 eine Dichtung zur Staub- und Feuchtigkeitsabdichtung angebracht ist. Im Motorgehäuse 11 ist der beispielsweise als Kommutatormotor ausgebildete Elektromotor aufgenommen, dessen den Kommutator tragende Rotorwelle in das Getriebegehäuse hineinragt. Entsprechend sind die mit dem Kommutator zusammenwirkenden Kommutatorbürsten im Getriebegehäuse 10 angeordnet, und ein Steckeranschluß 13 zur Stromversorgung und Steuerung des Kommutatormotors ist in den Getriebedeckel 12 verlegt. Der Getriebemotor wird an die Fahrzeugelektronik mittels eines Verbindungssteckers (hier nicht dargestellt) angeschlossen, der den Steckeranschluß 13 kontaktiert. Der Steckeranschluß 13 ist einmalig und mit einheitlichen elektrischen Funktionen, z.B. Parkstellung, Entstörung, einheitliche Kontaktier- und Prüfstellung, ausgeführt. Im Ausführungsbeispiel weist der Steckeranschluß 13 ingesamt fünf Anschlußkontakte auf, die als Steckbuchsen oder Steckhülsen 14 ausgeführt und unmittelbar in den Gehäusedeckel 12 eingesetzt sind, vorzugsweise beim Spritzen des Gehäusedeckels 12 und Kunststoff mit eingespritzt werden. Die Steckhülsen 14 sind mit einem Stanzgitter, einzelnen Leiterstreifen oder einer Leiterplatte auf der Innenseite des Gehäusedeckels 12 kontaktiert.

Um den Getriebemotor kompatibel mit den unterschiedlich konzipierten Verbindungssteckern verschiedener Fahrzeughersteller zu machen und eine Anpassung des Steckeranschlusses 13 an die verschiedenen Verbindungsstecker und damit eine ständige konstruktive Änderung des Gehäusedeckels 12 zu vermeiden, wird ein in Fig. 2 perspektivisch dargestellter Adapter 15 vorgehalten, der eine an den Steckeranschluß 13 angepaßte erste Gruppe 16 von elektrischen Kontakten und eine an den vom Fahrzeughersteller vorgegebenen Verbindungsstecker angepaßte zweite Gruppe 17 von elektrischen Kontakten aufweist. Innerhalb des Adapters 15 sind die Kontakte der beiden Kontaktgruppen 16,17 elektrisch leitend miteinander verbunden. Der Adapter 15 besitzt einen Adapterkörper 20, dessen Querschnitt einem flachgedrückten Oval mit parallel verlaufenden Längsseiten entspricht. In die eine Stirnseite 201 des Adapterkörpers 20 ist eine hohlraumförmige Vertiefung 22 eingebracht. Die Kontakte der beiden Kontaktgruppen 16,17 sind jeweils als flache Steckzungen 18,19 ausgebildet, wobei die Steckzungen 18 der ersten Kontaktgruppe 16 nahe der von der Vertiefung 22 abgekehrten Stirnseite 202 an der unteren Längsseite des Adapterkörpers 20 abstehen und die Steckzungen 19 der zweiten Kontaktgruppe 17 in der Vertiefung 22 des Adapterkörpers 15 vom Grund der Vertiefung 22 axial abstehen und innerhalb der Vertiefung 22 frei zugänglich sind. Die Steckzungen 18,19 sind dabei so bemessen und angeordnet, daß die Steckzungen 18 formschlüssig in die Steckzungen 14 des Steckeranschlusses 13 und die Steckzungen 19 formschlüssig in entsprechende Steckbuchsen des kundenspezifischen Verbindungssteckers einschiebbar sind. Wie in Fig. 2 strichliniert angedeutet ist, erfolgt die elektrische Verbindung der Steckzungen 18 mit den Steckzungen 19 durch Leisten oder Stege 21 an deren Enden die Steckzungen 18 bzw. 19 einstückig angeformt sind. Die Stege 21 sind mit definiertem Abstand voneinander achsparallel im Adapterkörper 20 festgelegt.

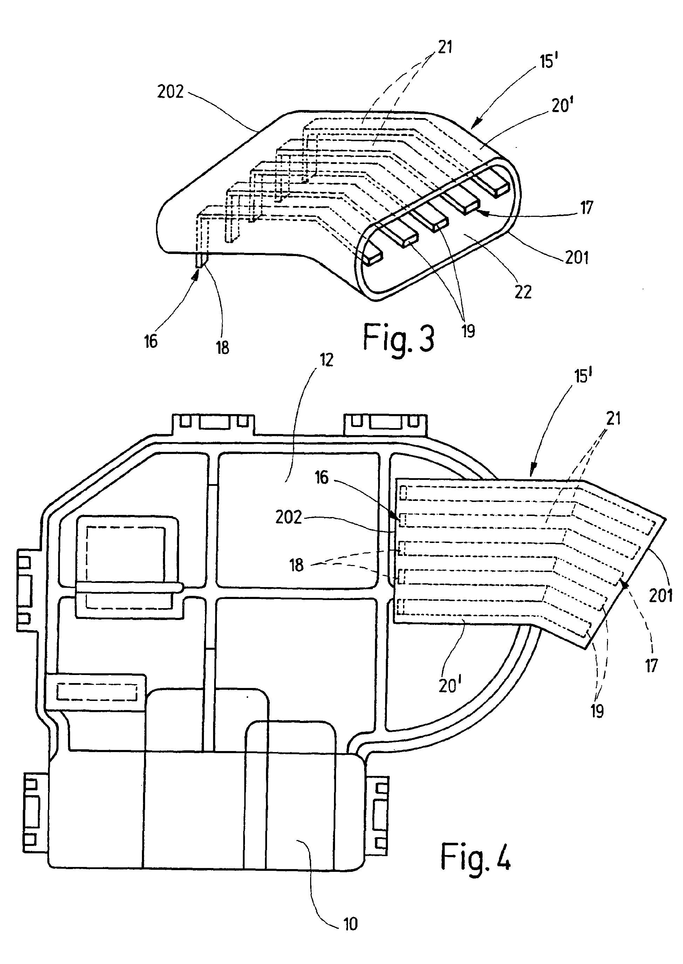

In Fig. 3 ist ein weiteres Ausführungsbeispiel eines Adapters 15' dargestellt, der die Forderung des Kunden nach einer bestimmten räumlichen Ausrichtung des kundenspezifischen Verbindungssteckers bezüglich des Getriebemotors erfüllt. Der mit einem abgewinkelten Adapterkörper 20' ausgeführte Adapter 15' ist wiederum perspektivisch dargestellt, wobei die offene Stirnseite 201 mit den in der Vertiefung 22 einliegenden Steckzungen 19 und die vor der anderen Stirnseite 202 nach unten rechtwinklig aus dem Adapterkörper 20' austretenden Steckzungen 18 zu sehen sind.

In Fig. 4 ist das Getriebegehäuse 10 des Getriebemotors gemäß Fig. 1 dargestellt, wobei in den Einheits-Steckeranschluß 13 im Getriebegehäusedeckel 12 der Adapter 15' gemäß Fig. 4 eingesteckt ist, so daß die an der Unterseite des Adapterkörpers 20' abstehenden Steckzungen 18 in die Steckhülsen 14 des Einheits-Steckeranschlusses 13 eingeschoben sind. Die an der einen Stirnseite 201 des Adapterkörpers 20' zugänglichen Steckzungen 19 sind dabei noch nicht mit dem kundenspezifischen Verbindungsstecker belegt, der nunmehr in die an der Stirnseite 201 vorhandene Vertiefung 22 einzuschieben ist.

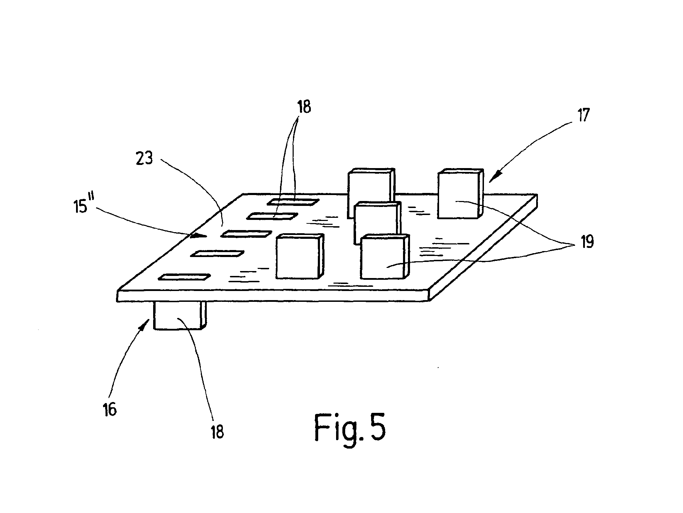

In einer in Fig. 5 dargestellten alternativen Ausführung ist der Adapter 15" als eine flache Kunststoffplatte 23 ausgebildet, und die Kontakte der beiden Kontaktgruppen 16,17 bestehen aus in der Kunststoffplatte 23 festgelegten Steckzungen 18,19, wobei die Steckzungen 18 der ersten Kontaktgruppe 16 auf der einen Seite, hier der Unterseite der Kunststoffplatte 23 und die Steckzungen 19 der zweiten Kontaktgruppe 17 auf der anderen Seite, hier der Oberseite der Kunststoffplatte 23 von dieser rechtwinklig abstehen. Die Steckzungen 18,19 sind bis auf die jeweils andere Seite der Kunststoffplatte 23 hindurchgeführt und so bemessen und angeordnet, daß die Steckzungen 18 formschlüssig in die Steckhülsen 14 des Steckeranschlusses 13 und die Steckzungen 19 formschlüssig in entsprechende Steckbuchsen des kundenspezifischen Verbindungssteckers einschiebbar sind. Die elektrische Verbindung der Steckzungen 18 mit den Steckzungen 19 auf der Unterseite der Kunststoffplatte 23, von der die Steckzungen 18 abstehen. Die elektrischen Verbindungen sind als Leiterbahnen ausgeführt, die die Stirnenden der bis auf die Unterseite der Kunststoffplatte 23 hindurchgeführten Steckzungen 19 und die Stirnenden der Steckzungen 18 kontaktieren.

## Patentansprüche

1. Elektromotor, insbesondere elektrischer Getriebemotor zum Antreiben von Fahrzeugaggregaten, wie Front- und Heckscheibenwischer, Fensterheber o. dgl., mit einem mittels eines Gehäusedeckels (12) verschließbaren Gehäuse, insbesondere Getriebegehäuse (10), und mit einem im Gehäusedeckel (12) mittels eines Verbindungssteckers kontaktierbaren Einheitssteckeranschluss (13) zum Anschließen des Elektromotors an die Fahrzeugelektronik, wobei der Einheitssteckeranschluss (13) mit einem wechselbaren Adapter (15; 15'; 15") belegt ist, der eine an den Einheitssteckeranschluss (13) angepasste erste Gruppe (16) von elektrischen Kontakten und eine an den Verbindungsstecker angepasste zweite Gruppe (17) von elektrischen Kontakten aufweist, und dass die Kontakte der beiden Kontaktgruppen (16, 17) innerhalb des Adapters (15; 15'; 15") miteinander elektrisch leitend verbunden sind, wobei der Adapter (15, 15') einen Adapterkörper (20, 20') aufweist, an dessen einer Stirnseite (201) die in einer Vertiefung (22) einliegenden Steckungen (19) der einem Kontaktgruppe (17) zugänglich sind, **dadurch gekennzeichnet, dass** die Steckungen (18) der anderen Kontaktgruppe (16) nahe der anderen Stirnseite (202) des Adapterkörpers (20, 20') an der unteren Längsseite rechtwinklig aus dem Adapterkörper (20, 20') abstehen, wobei der Adapter (15,15',15,") mit den Steckzungen (18) in dem Einheits-Steckeranschluss (13) des Gehäusedeckels (12) einsteckbar ist.

2. Motor nach Anspruch 1, **dadurch gekennzeichnet, dass** der Steckeranschluss (13) Steckhülsen (14) aufweist und die Kontakte der beiden Kontaktgruppen (16, 17) des Adapters (15; 15'; 15 ") aus Steckzungen (18, 19) bestehen, von denen die einen Steckzungen (18) in die Steckhülsen (14) des Steckeranschlusses (13) und die anderen Steckzungen (19) in die Steckhülsen eines Verbindungssteckers formschlüssig einschiebbar ausgebildet sind.

3. Motor nach Anspruch 2, **dadurch gekennzeichnet, dass** die Steckhülsen (14) des Steckeranschlusses (13) unmittelbar in den Gehäusedeckel (12) eingesetzt, vorzugsweise eingegossen, sind.

4. Motor nach Anspruch 1, **dadurch gekennzeichnet, dass** die elektrische Verbindung zwischen den Steckzungen (18, 19) durch im Adapterkörper (20; 20') einliegende Leisten oder Stege (21) hergestellt ist, an deren Enden die Steckzungen (18, 19) einstückig angeformt sind.

5. Motor nach Anspruch 2 oder 3, **dadurch gekennzeichnet, dass** der Adapter (15") als eine flache Kunststoffplatte (23) ausgebildet ist und dass die Steckzungen (18) der einen Kontaktgruppe (16) von der einen Seite und die Steckzungen (19)der anderen Kontaktgruppe (17) von der anderen Seite der Kunststoffplatte (23) abstehen.

## Claims

1. Electric motor, in particular electric geared motor, for driving vehicle assemblies, such as front and rear windscreen wipers, window winders or the like, having a housing, in particular a gear mechanism housing (10), which can be closed by means of a housing cover (12), and having a unit plug connection (13), with which a connecting plug can make contact in the housing cover (12), for connecting the electric motor to the vehicle electronics, with the unit plug connection (13) being occupied by an exchangeable adapter (15; 15'; 15") which has a first group (16) of electrical contacts which is matched to the unit plug connection (13) and a second group (17) of electrical contacts which is matched to the connecting plug, and with the contacts of the two contact groups (16, 17) being electrically conductively connected to one another within the adapter (15; 15'; 15"), with the adapter (15, 15') having an adapter body (20, 20') and the plugging tongues (19), which are located in a recess (22), of one contact group (17) being accessible at one end face (201) of the said adapter body, **characterized in that** the plugging tongues (18) of the other contact group (16) project at right angles from the adapter body (20, 20') close to the other end face (202) of the adapter body (20, 20') at the lower longitudinal side, it being possible to plug the adapter (15, 15', 15") into the unit plug connection (13) of the housing cover (12) using the plugging tongues (18).

2. Motor according to Claim 1, **characterized in that** the plug connection (13) has plugging sleeves (14), and the contacts of the two contact groups (16, 17) of the adapter (15; 15'; 15") comprise plugging tongues (18, 19), of which one set of plugging tongues (18) are designed such that they can be pushed into the plugging sleeves (14) of the plug connection (13) in an interlocking manner, and the other plugging tongues (19) are designed such that they can be pushed into the plugging sleeves of a connecting plug in an interlocking manner.

3. Motor according to Claim 2, **characterized in that** the plugging sleeves (14) of the plug connection (13) are inserted, preferably cast, directly into the housing cover (12).

4. Motor according to Claim 1, **characterized in that** the electrical connection between the plugging tongues (18, 19) is produced by bars or webs (21) which are located in the adapter body (20; 20'), and the plugging tongues (18, 19) are integrally formed on the ends of the said bars or webs.

5. Motor according to Claim 2 or 3, **characterized in that** the adapter (15") is designed as a flat plastic plate (23), and **in that** the plugging tongues (18) of one contact group (16) project from one face of the plastic plate (23) and the plugging tongues (19) of the other contact group (17) project from the other face of the plastic plate (23).

## Revendications

1. Moteur électrique, notamment motoréducteur électrique servant à l'entraînement d'équipements de véhicules automobiles tels que des essuie-glaces frontaux ou latéraux, des lève-vitres ou similaires, dans lequel
- un boîtier, notamment un boîtier de réducteur (10) peut être obturé par un couvercle de boîtier (12) comportant une fiche modulaire (13) pouvant être mise en contact par l'intermédiaire d'un connecteur pour raccorder le moteur électrique à l'électronique du véhicule,
- la fiche modulaire (13) est équipée d'un adaptateur (15 ; 15' ; 15") interchangeable, qui présente un premier groupe (16) de contacts électriques adapté à la fiche (13) et un second groupe (17) de contacts électriques adapté au connecteur, les contacts de ces deux groupes (16, 17) étant reliés électriquement à l'intérieur de l'adaptateur (15 ; 15' ; 15") qui présente un corps d'adaptateur (20, 20') dont une face frontale (201) permet d'accéder aux broches de connexion (19) du second groupe de contacts (17) situées dans une cavité (22),
**caractérisé en ce que**
les broches de connexion (18) de l'autre groupe de contacts (16) situées près de l'autre face frontale (202) du corps d'adaptateur (20, 20'), font saillie sur le côté longitudinal inférieur du corps d'adaptateur (20, 20'), de sorte que l'adaptateur (15, 15', 15") peut être enfiché par les broches de connexion (18) sur la fiche modulaire (13) du couvercle de boîtier (12).

2. Moteur électrique selon la revendication 1,
**caractérisé en ce que**
la fiche (13) présente des douilles d'enfichage (14) et les contacts des deux groupes de contact (16, 17) de l'adaptateur (15 ; 15' ; 15") sont constitués par des broches d'enfichage (18, 19) dont les premières (18) peuvent être enfoncées dans les douilles d'enfichage (14) de la fiche (13), tandis que les autres broches d'enfichage (19) peuvent être enfoncées dans les douilles d'enfichage d'un connecteur.

3. Moteur électrique selon la revendication 2,
**caractérisé en ce que**
les douilles d'enfichage (14) du raccord d'enfichage (13) sont montées directement dans le couvercle de boîtier (12), de préférence en étant scellées dans celui-ci.

4. Moteur électrique selon la revendication 1,
**caractérisé en ce que**
la liaison électrique entre les broches d'enfichage (18, 19) est assurée par des barrettes ou lames (21) situées dans le corps d'adaptateur (20 ; 20') dont les extrémités comportent les broches d'enfichage (18, 19) formés d'une seule pièce.

5. Moteur électrique selon la revendication 2 ou 3,
**caractérisé en ce que**
l'adaptateur (15") est constitué par une plaque en matière plastique (23) plane, les broches d'enfichage (18) du groupe de contacts (16) étant en saillie d'un côté de la plaque (23), tandis que les broches d'enfichage (19) de l'autre groupe de contacts font saillie de l'autre côté.
